# EUROPEAN PATENT APPLICATION

(11) **EP 2 023 628 A1**
(43) Date of publication of application: **11.02.2009**
(21) Application number: 08153641.9
(22) Date of filing: 28.03.2008
(51) Int. Cl.: H04N 5/765, H04N 5/44

(54) **Video apparatus and method for recognizing digital interface thereof**

(30) Priority: 26.07.2007 KR 20070075104
(71) Applicant: Samsung Electronics Co., Ltd., Suwon-si, Gyeonggi-do 442-742 (KR)
(72) Inventor: Noh, Young-joong, Gyeonggi-do (KR)
(74) Representative: Clark, David James

(57) **Abstract**

A video apparatus and a method for recognizing a digital interface thereof are disclosed. The method for recognizing the digital interface of the video apparatus enables a multimedia source to re-execute a high definition multimedia interface (HDMI) recognition to deal with errors when the multimedia source connected using the HDMI fails to recognize that the video apparatus supports the HDMI due to a cable connection error, an EDID recognition error, or an HDCP authentication error. The video apparatus determines whether or not a format of an input video signal is HDMI or DVI, and displays a result on a screen so that a user can recognize the format. As a result, the video apparatus enables a user to recognize whether or not the HDCP authentication error is occurred, and notifies the user of a method for improving the cause of the HDCP authentication error.

## Description

### BACKGROUND OF THE INVENTION

### 1. Field of the Invention

Apparatuses and methods consistent with the present invention relate to digital interface recognition, and more particularly, to a video apparatus to improve a high definition multimedia interface (HDMI) recognition error in a video apparatus supporting an HDMI, and a method for recognizing a digital interface thereof.

### 2. Description of the Related Art

Digital video has been popularized recently, and an interface is provided between multimedia sources providing a digital video, such as settop boxes, DVD players, and PCs, and video apparatuses processing the digital video provided from the multimedia sources and displaying the processed video, such as audio visual (AV) apparatuses, monitors, and digital televisions (DTVs).

A digital interface may be a digital visual interface (DVI), or a high definition multimedia interface (HDMI), or others, and a high bandwidth digital content protection (HDCP) is typically used as a standardized way to prevent duplication of the digital video provided through the digital interface.

Generally, a multimedia source is connected with a video apparatus using the HDMI to enable data transmission. When the multimedia source is connected with the video apparatus, and the multimedia source applies 5V to the video apparatus, the video apparatus determines that the multimedia source is connected thereto through a HDMI cable. If a hot plug detection (HPD) signal having a low level is input from the video apparatus, the multimedia source determines that the video apparatus is connected thereto.

The HPD signal indicates the time that the multimedia source reads extended display identification data (EDID) from the video apparatus. The HPD signal has to maintain a low level for at least 100 ms.

The multimedia source reads the EDID from the video apparatus while the HPD signal of low level is input. The multimedia source determines whether or not the video apparatus is authenticated by the HDCP. The multimedia source reads an HDCP authentication key of the video apparatus. If the HDCP authentication key of the video apparatus corresponds to an HDCP authentication key of the multimedia source, the multimedia source provides a digital video, displaying a normal video on the video apparatus.

If the connection between the multimedia source and the video apparatus fails in the process of reading the EDID, or the HPD signal is untimely sensed, the multimedia source cannot read the EDID accurately. As a result, the multimedia source provides the digital video to the video apparatus in a DVI format according to a default setting.

When the HDCP authentication fails, the multimedia source intercepts an output of the digital video or provides an encoded digital video to protect the digital video.

Accordingly, a problem may occur in that the video apparatus cannot output video and sound successfully. If a user cannot determine the cause of the problem, the user experiences inconvenience.

### SUMMARY OF THE INVENTION

Exemplary embodiments of the present invention aim to overcome the above problems and disadvantages and/or other disadvantages not described above.

According to an aspect of the present invention, there is provided a method for recognizing a digital interface of a video apparatus which is connected with a multimedia source through the digital interface, the method comprising determining whether or not a set display mode is a digital interface mode; if the display mode is the digital interface mode, determining whether or not a format of a video signal input from the multimedia source is the digital interface format; and if the format of the video signal is not the digital interface format, outputting a digital interface recognition signal to the multimedia source so that the multimedia source re-executes the digital interface recognition.

The method may further comprise checking an input value of an audio connection terminal if the display mode is the digital interface mode; displaying a message indicating that a connection mode with the multimedia source is the digital video interface mode if the input value of the checked audio connection terminal changes; and confirming through the displayed message that the connection mode with the multimedia source is the digital video interface mode.

The displayed message may comprise a phrase indicating that the connection mode is the digital video interface mode, and a selection item for selecting whether or not the connection mode is the digital video interface mode.

The method may further comprise determining whether or not the format of the video signal input from the multimedia source is the digital interface format, if the input value of the checked audio connection terminal does not change.

The method may further comprise determining whether or not the format of the video signal input from the multimedia source is the digital interface format, if the connection mode with the multimedia source is not the digital video interface mode.

The digital interface recognition signal may be a hot plug detection (HPD) signal of a low level.

The outputting may comprise extending a low level period of the digital interface recognition signal, and outputting the digital interface recognition signal to the multimedia source.

The outputting may comprise extending the low level period of the digital interface recognition signal by extending a high level period of a high level control signal controlling the digital interface recognition signal.

The outputting may comprise reiterating the extending of the low level period of the digital interface recognition signal and the output to the multimedia source, and the determining as to whether or not the format of the video signal input from the multimedia source is the digital interface format by a predetermined number of times if the format of the video signal input from the multimedia source is not the digital interface format after the low level period of the digital interface recognition signal is extended to output the digital interface recognition signal to the multimedia source.

The outputting may comprise displaying a message indicating an abnormality of a connection state if the format of the video signal input from the multimedia source is not the digital interface format after the predetermined number of times of the reiteration.

The digital interface may be a high definition multimedia interface (HDMI).

According to another aspect of the present invention, there is provided a video apparatus which is connected with a multimedia source through a digital interface, the apparatus comprising a digital connector which is connected with the multimedia source; and a controller which determines whether or not a format of a video signal input from the multimedia source connected with the digital connector is a digital interface format, if a set display mode is the digital interface mode, and if the format of the video signal is not the digital interface format, controls to cause a digital interface recognition signal to be output to the multimedia source so that the multimedia source re-executes the digital interface recognition.

The video apparatus may further comprise an audio connector which is connected with the multimedia source; an on-screen display (OSD) generator which displays a message indicating that a connection mode with the multimedia source is the digital video interface mode; and a receiver which receives an acknowledgement signal indicating that the connected mode with the multimedia source is the digital video interface mode, wherein if the display mode is the digital interface mode, the controller checks an input value of the audio connector, and if the input value of the audio connector changes, the controller controls the OSD generator to display a message indicating that the connection mode with the multimedia source is the digital video interface mode, and acknowledges through the receiver that the connection mode with the multimedia source is the digital interface mode.

The OSD generator may display the message to comprise a phrase indicating that the connection mode is the digital video interface mode, and a selection item for selecting whether or not the connection mode is the digital video interface mode.

The video apparatus may further comprise a decoder which stores the format of the video signal input form the multimedia source, wherein if the input value of the checked audio connection terminal does not change, the controller determines whether the format of the video signal input from the multimedia source through I2C communication with the decoder is the digital interface format.

If the connection mode with the multimedia source is not the digital video interface mode, the controller may determine whether or not the format of the video signal input from the multimedia source through the I2C communication with the decoder is the digital interface format.

The video apparatus may further comprise a digital interface recognition signal generator which outputs the digital interface recognition signal to the multimedia source, wherein if the format of the video signal input from the multimedia source is not the digital interface format, the controller controls the digital interface recognition signal generator to output the digital interface recognition signal to the multimedia source so that the multimedia source re-executes the digital interface recognition.

The digital interface recognition signal may be a hot plug detection (HPD) signal of a low level.

The controller may control the recognition signal controller to extend a low level period of the digital interface recognition signal to output the digital interface recognition signal to the multimedia source.

The controller may extend the low level period of the digital interface recognition signal by extending a high level period of a high level control signal controlling the digital interface recognition signal.

If the format of the video signal input from the multimedia source is not the digital interface format after the low level period of the digital interface recognition signal is extended to output the digital interface recognition signal to the multimedia source, the controller may reiterate the extending of the low level period of the digital interface recognition signal and the output to the multimedia source, and the determining as to whether or not the format of the video signal input from the multimedia source is the digital interface format by a predetermined number of times.

If the format of the video signal input from the multimedia source is not the digital interface format after the predetermined number of times of the reiteration, the controller may control the OSD generator to display a message indicating an abnormality of a connection state.

The digital interface may be a high definition multimedia interface (HDMI).

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a block diagram of a video apparatus according to an exemplary embodiment of the present invention;
FIG. 2 is a flowchart illustrating a method for recognizing a digital interface of a video apparatus according to an exemplary embodiment of the present invention;
FIG. 3 is a flowchart illustrating a method for recognizing a digital interface of a video apparatus according to another exemplary embodiment of the present invention; and
FIG. 4 illustrates a screen providing format information of a display mode and an input signal of a video apparatus according to an exemplary embodiment of the present invention.

### DETAILED DESCRIPTION OF EXEMPLARY EMBODIMENTS OF THE INVENTION

The present invention will now be described in greater detail with reference to the accompanying drawings, in which exemplary embodiments of the invention are shown.

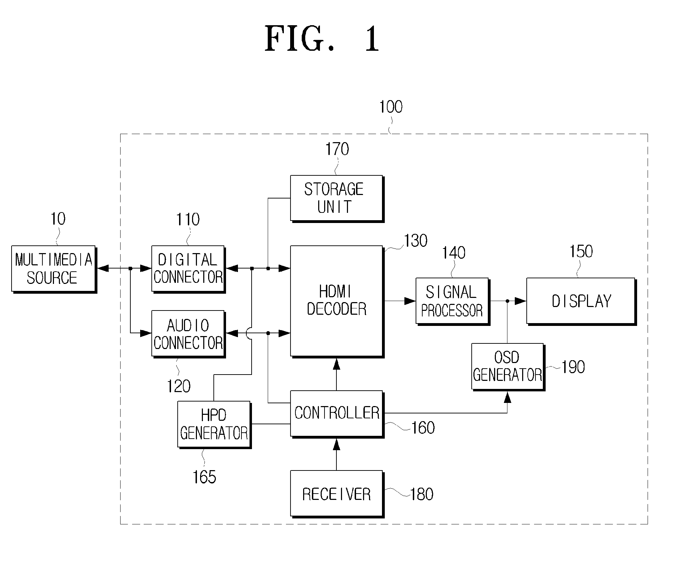

FIG. 1 is a block diagram of a video apparatus according to an exemplary embodiment of the present invention.

A video apparatus 100 executes an algorithm for improving an authentication error when a set display mode is in a high definition multimedia interface (HDMI) mode. Even after a user confirms that the display mode is not a digital visual interface (DVI) mode, if an HDMI recognition error occurrs, the video apparatus 100 suitably enables a multimedia source 10 to re-execute HDMI recognition.

Referring to FIG. 1, the video apparatus 100 is connected with the multimedia source 10 using an HDMI. The video apparatus 100 may comprise a digital connector 110, an audio connector 120, an HDMI decoder 130, a signal processor 140, a display 150, a controller 160, a hot plug detection (HPD) generator 165, a storage unit 170, a receiver 180, and an on-screen display (OSD) generator 190.

The digital connector 110 is connected with the multimedia source 10, and receives a digital video source and a voltage of 5 V from the multimedia source 10.

The audio connector 120 receives an audio signal from the multimedia source 10. When the multimedia source 10 outputs a digital video signal in a HDMI mode, the digital video signal includes the audio signal.

The HDMI decoder 130 stores a high bandwidth digital content protection (HDCP) authentication key, and decodes the digital video signal received from the digital connector 110. The HDMI decoder 130 stores the format of the received digital video signal at a register provided therein.

The signal processor 140 processes the decoded digital video signal to enable a display, and displays a digital video corresponding to the digital video signal on the display 150.

If the voltage of 5V is applied from the multimedia source 10 through the digital connector 110, the controller 160 determines that the multimedia source 10 is connected therewith. The controller 160 controls the HPD generator 165 to output a HPD signal of low level to the multimedia source 10 through the digital connector 110.

The HPD generator 165 generates the HPD signal of the low level under the control of the controller 160, and outputs the HPD signal to the multimedia source 10 through the digital connector 110.

The controller 160 checks an input value of the audio connector 120. If the input value of the audio connector 120 is converted from a low level to a high level, the controller 160 determines that the multimedia source 10 is connected through the audio connector 120.

The storage unit 170 stores extended display identification data (EDID). The EDID comprise resolution, color space, and availability of HDMI mode supported by the video apparatus 100. For example, the storage unit 170 may be an Electrically Erasable Programmable Read-Only Memory (EEPROM).

The multimedia source 10 reads the EDID stored at the storage unit 170 through the digital connector 110 while an HPD signal of a low level is input.

The controller 160 determines a currently set display mode. If the display mode is in an HDMI mode, the controller 160 executes an algorithm for improving an HDMI recognition error.

If the input value of the audio connector 120 is changed, the controller 160 controls the OSD generator 190 to display a message indicating that a connection mode is a DVI mode. The receiver 180 receives from a remote controller an input signal and a user acknowledgement signal indicating whether or not the connection mode is the DVI mode.

If it is determined that the connection mode is not the DVI mode by the user acknowledgement signal, the controller 160 checks the format of the digital video signal input to the HDMI decoder 130. The controller 160 communicates with the HDMI decoder 130 through an I2C interface.

If the checked format of the digital video signal is not an HDMI, the controller 160 controls the HPD generator 165 to re-output the HPD signal of low level to the multimedia source 10. The controller 160 controls the HPD generator 165 so that the low level period is extended to generate the HPD signal.

If the format of the digital video signal checked by re-outputting the HPD signal is not the HDMI, and if the format of the digital video signal is not the HDMI after reiterating the above operations, the controller 160 controls the OSD generator 190 to display a message indicating that a connection has an abnormality.

While the HDCP authentication key is stored at the HDMI decoder 130, it is merely an exemplary embodiment of the present invention. The HDCP authentication key may be stored in a recording media provided at an exterior of the HDMI decoder 130.

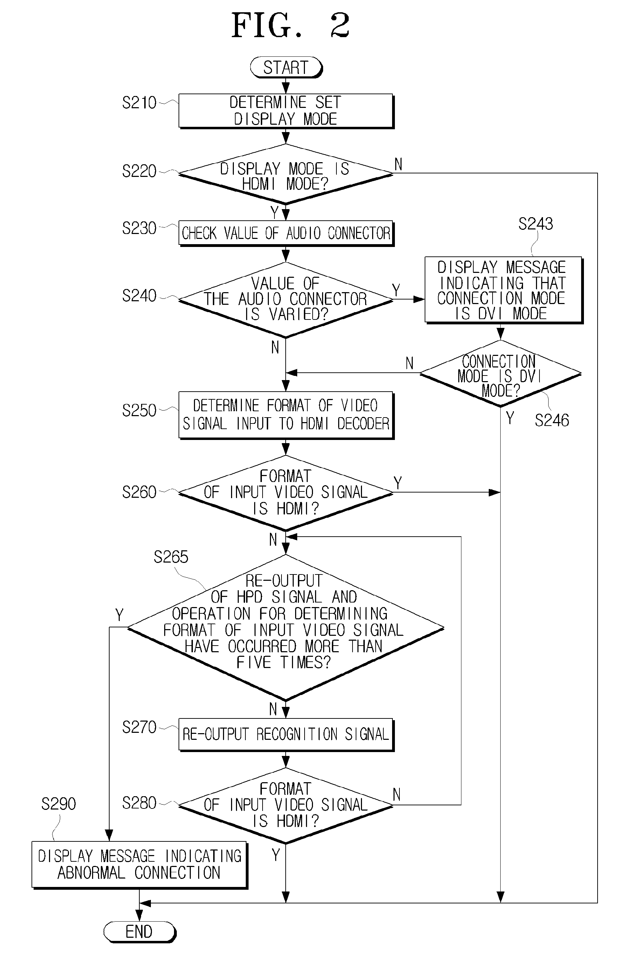

FIG. 2 is a flowchart illustrating a method for recognizing a digital interface of a video apparatus according to an exemplary embodiment of the present invention.

Referring to FIG. 2, the controller determines a display mode set to a video device (S210). The display mode may be set according to a type of a connected multimedia source, and may include television (TV) mode, HDMI mode, AV mode, or personal computer (PC) mode.

The controller 160 determines whether or not the display mode is an HDMI mode (S220). Because an error may be occurred, when the controller 160 recognizes the HDMI, the controller 160 executes an algorithm for improving an HDMI recognition error, if the display mode is the HDMI mode.

If the display mode is not the HDMI mode, it is unnecessary to execute the algorithm for improving the HDMI recognition error.

If the display mode is the HDMI mode, the controller 160 checks an input value of the audio connector (S230).

The controller 160 determines whether or not an input value of the audio connector 120 changes (S240). That is, the controller 160 determines whether or not the input value of the audio connector 120 is converted from a low level to a high level. The levels change according to video devices. If an audio cable is not connected with the audio connector 120, and the input value is in a high level, the controller 160 may determine whether or not the input value is changed to a low level.

If the input value of the audio connector 120 is changed although the set display mode is the HDMI mode, the controller 160 controls the OSD generator 190 to display a message indicating that the connection mode is the DVI mode (S243). That is, the OSD generator 190 generates an item for selecting "OK" or "NO" with a message indicating "the connection mode is DVI mode", and displays the item on the display 150 to receive from the user whether or not the DVI connection is correctly set.

The controller 160 determines whether or not the set connection mode is the DVI mode (S246). Specifically, if a signal corresponding to the item "OK" is input through the receiver 180, the controller 160 determines that the set connection mode is the DVI mode, and if a signal corresponding to the item "NO" is input through the receiver 180, the controller 160 determines that the set connection mode is not the DVI mode.

If the set connection mode is not the DVI mode, the controller 160 determines the format of the video signal input to the HDMI decoder 130 (S250). That is, the controller 160 reads the format of the digital video signal stored at the register of the HDMI decoder 130 through the I2C interface, and determines that the format of the input video signal.

For example, if the format of the input video signal is the DVI, the HDMI decoder 130 stores 0 at the register, and if the format of the input video signal is the HDMI, the decoder 130 stores 1 at the register. Accordingly, if a value stored at the register is 0, the controller 160 determines that the format of the input video signal is the DVI, and if a value stored at the register is 1, the controller 160 determines that the format of the input video signal is the HDMI.

The controller 160 determines whether or not the format of the input video signal is the HDMI (S260). As the display mode is the HDMI mode, the controller 160 confirms that the format of the input video signal is the HDMI. Since the display mode is the HDMI mode, and it is confirmed by the user that the connection mode is not the DVI mode, the controller confirms whether or not the format of the input video signal is the HDMI.

If the format of the input video signal is not the HDMI, if a re-output of the HPD signal and an operation for determining the format of the input video signal have not occurred more than five times (S265), the controller 160 controls the HPD generator 165 to re-output to the multimedia source 10 a recognition signal, that is an HPD signal (S270). If the format of the input video signal is not the HDMI, and a re-output of the HPD signal and an operation for determining the format of the input video signal have occurred more than five times (S265), the controller 160 determines that an HDMI recognition error is occurred. Because it is determined that the format of the input video signal is not the HDMI, although the display mode is the HDMI mode, and it is confirmed by the user that the connection mode is not the DVI mode.

If a re-ouput of the HPD signal is to occur, the controller 160 outputs a HPD control signal of a high level to the HPD generator 164 to generate a HPD signal of a low level. The controller 160 extendedly outputs the high level period of the HPD control signal to extend the low level period of the HPD signal.

For example, the controller 160 outputs additional 50 ms of the HPD control signal of the high level to extend the low level period of the HPD signal by 50 ms.

The controller 160 determines again whether or not the format of the input video signal is the HDMI (S280). The controller 160 checks the format of the video signal input to the HDMI decoder 130 in the same manner as in operation S250, and determines whether or not the format of the input video signal is the HDMI.

If the format of the input video signal is not the HDMI, and a re-output of the HPD signal and an operation for determining the format of the input video signal have not occurred more than five times (S265), the controller 160 extends the low level period of the HPD signal by a predetermined increment, re-outputs the HPD signal, and reiterates the operation to determine whether the format of the input video signal is the HDMI. The controller 160 reiterates the re-output of the HPD signal and the operation for determining the format of the input video signal not more than five times. The controller 160 output HPD control signal of high level so that the low level period of the HPD signal does not exceed 1.5 sec.

When the multimedia source 10 fails to recognize that the video apparatus 100 supports the HDMI due to a cable connection error, an EDID recognition error, or an HDCP authentication error, the multimedia source 10 re-executes the HDCP recognition to deal with the errors.

If the format of the input video signal is not the HDMI even after reiterating the re-output of the HPD signal and the determining of the format of the input video signal five times maximum, the controller 160 controls the OSD generator 190 to display a message indicating an abnormal connection (S290). That is, if the display mode is the HDMI mode but the format of the input video signal is continuously determined not to be the HDMI, the controller 160 determines that the cable connection has a problem.

The controller 160 controls the OSD generator 190 to display a message "check a cable and connection state, and re-connect the cable" so that a user can solve the cause of the HDMI recognition error.

If the set connection mode is the DVI mode in operation S246, but the format of the video signal input in operations S260 to S270 is HDMI, the controller 160 terminates the HDMI authentication error enhancement algorithm.

The controller 160 controls the OSD generator 190 to display the format of the video signal on a portion of the display whenever the format of the input video signal is determined. Accordingly, the controller 160 enables the user to recognize whether or not the HDMI recognition error is occurred.

The controller 160 controls the OSD generator 190, so that the format of the displayed video is displayed on a potion of the display while the input video signal is displayed. As a result, the user can recognize whether the format of the displayed video is HDMI or DVI.

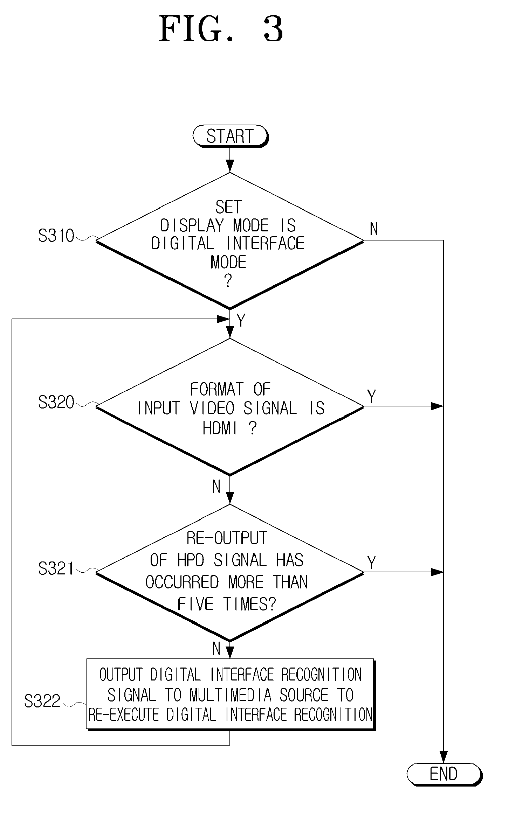

FIG. 3 is a flowchart illustrating a method for recognizing a digital interface of a video apparatus according to another exemplary embodiment of the present invention.

Referring to FIG. 3, the video apparatus 100 determines whether or not a set display mode is a digital interface mode (S310).

If the set display mode is the digital interface mode, the video apparatus 100 determines whether or not the format of the video signal input from the multimedia source 10 is the HDMI (S320).

If the format of the video signal input from the multimedia source 10 is not the digital format, and a re-output of the HPD signal has not occurred more than five times (S321), the video apparatus 100 outputs a digital interface recognition signal to the multimedia source 10, so that the multimedia source 10 re-executes the digital interface recognition (S322).

While the operation is reiterated less than five times to re-output the HPD signal and to determine the format of the input video signal, it is merely an exemplary embodiment of the present invention. The operation may be reiterated more than five times.

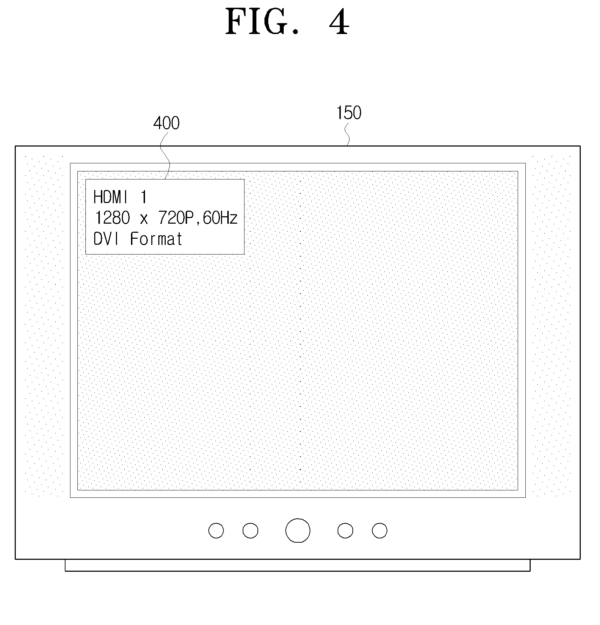

FIG. 4 is a view illustrating a screen providing format information of a display mode and an input signal of a video apparatus according to an exemplary embodiment of the present invention.

FIG. 4 illustrates an OSD screen 400 displayed on the display 150 when a user requests information of a current input signal using a remote controller. The video apparatus 100 displays a currently set display mode, along with a resolution and format of a currently input video signal through the OSD screen 400.

For example, the OSD screen 400 displays that the display mode is HDMI 1, and the format of the input video signal is DVI. As a result, the user can recognize occurrence of an HDMI recognition error.

As described above, the HDMI recognition error may be improved or recovered, which is occurred due to the cable connection abnormality, EDID recognition error, or HDCP authentication error.

Because a user can recognize whether or not an HDCP authentication error is occurred, and knows how to improve the cause of the HDCP authentication error according to an exemplary embodiment of the present invention, user's convenience is improved.

Exemplary embodiments of the present invention provide a video apparatus which improves recognition error of a digital interface to prevent an abnormal operation due to a cable connection abnormality or information recognition error and a method for recognizing a digital interface thereof.

Exemplary embodiments of the present invention also provide a video apparatus which displays a digital interface recognized while a recognition error of the digital interface is improved so that a user can recognize the digital interface and a method for recognizing a digital interface thereof.

Exemplary embodiments of the present invention also provide a video apparatus which displays a message so that a user can solve the cause of a digital interface recognition error and a method for recognizing a digital interface thereof.

The foregoing exemplary embodiments and advantages are merely exemplary and are not to be construed as limiting the present invention. The present teaching can be readily applied to other types of apparatuses.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for recognizing a digital interface of a video apparatus which is connected with a multimedia source through the digital interface, the method comprising:
first determining whether or not a display mode is a digital interface mode (S310);
second determining whether or not a format of a video signal input from the multimedia source is in the digital interface format, if the display mode is the digital interface mode (S320); and
outputting a digital interface recognition signal to the multimedia source to repeat the first and the second determining and the outputting, if the format of the video signal is not the digital interface format (S322).

2. The method of claim 1, further comprising:
checking an input value of an audio connection terminal, if the display mode is the digital interface mode (S230);
displaying to a user a message indicating that a connection mode with the multimedia source is the digital video interface mode, if the checked input value of the audio connection terminal changes (S243); and
confirming through the displayed message that the connection mode with the multimedia source is the digital video interface mode (S246).

3. The method of claim 2, wherein the displayed message comprises a phrase indicating that the connection mode is the digital video interface mode, and a selection item allowing the user to confirm whether or not the connection mode is the digital video interface mode.

4. The method of claim 2 or 3, further comprising:
determining whether or not the format of the video signal input from the multimedia source is the digital interface format, if the input value of the checked audio connection terminal does not change (S250).

5. The method of claim 2, 3 or 4, further comprising:
determining whether or not the format of the video signal input from the multimedia source is the digital interface format, if the user confirms that the connection mode with the multimedia source is not the digital video interface mode (S250).

6. The method of any preceding claim, wherein the digital interface recognition signal is a hot plug detection (HPD) signal set to a low level for a period of time.

7. The method of claim 6, wherein the outputting comprises
extending the low level period of the digital interface recognition signal, and outputting the digital interface recognition signal to the multimedia source.

8. The method of claim 7, wherein the outputting further comprises extending the low level period of the digital interface recognition signal by extending a high level period of a high level control signal controlling the digital interface recognition signal.

9. The method of claim 7 or 8, wherein the outputting further comprises, repeating the extending of the low level period of the digital interface recognition signal and the outputting of the digital interface recognition signal to the multimedia source, and the determining as to whether or not the format of the video signal input from the multimedia source is the digital interface format, by a number of times, if the format of the video signal input from the multimedia source is not the digital interface format after the low level period of the digital interface recognition signal is extended to output the digital interface recognition signal to the multimedia source.

10. The method of claim 7, 8 or 9, wherein the outputting further comprises, displaying a message indicating an abnormality of a connection state, if the format of the video signal input from the multimedia source is not the digital interface format after repeating the extending of the low level period of the digital interface recognition signal and the outputting the digital interface recognition signal to the multimedia source, and the determining as to whether or not the format of the video signal input from the multimedia source is the digital interface format, for the number of times.

11. The method of any preceding claim, wherein the digital interface is a high definition multimedia interface (HDMI).

12. A video apparatus which is connected with a multimedia source through a digital interface, the apparatus comprising:
a digital connector (110) which is connected with the multimedia source; and
a controller (160) which determines whether or not a format of a video signal input from the multimedia source connected with the digital connector (110) is a digital interface format, if a display mode is the digital interface mode, and causes a digital interface recognition signal to be output to the multimedia source so that the multimedia source re-executes digital interface recognition if the format of the video signal is not the digital interface format.

13. The video apparatus of claim 12, further comprising:
an audio connector (120) which is connected with the multimedia source;
an on-screen display (OSD) generator (190) which displays a message indicating that a connection mode with the multimedia source is the digital video interface mode; and
a receiver (180) which receives an acknowledgement signal indicating that the connection mode with the multimedia source is the digital video interface mode,
wherein if the display mode is the digital interface mode, the controller (160) checks an input value of the audio connector (120), and if the checked input value of the audio connector changes, the controller controls the OSD generator (190) to display a message to a user indicating that the connection mode with the multimedia source is the digital video interface mode, and acknowledges through the receiver (180) that the connection mode with the multimedia source is the digital interface mode.

14. The video apparatus of claim 13, wherein the message comprises a phrase indicating that the connection mode is the digital video interface mode, and a selection item to confirm whether or not the connection mode is intended to be the digital video interface mode.

15. The video apparatus of claim 13 or 14, further comprising:
a decoder (130) which stores the format of the video signal input from the multimedia source,
wherein if the input value of the checked audio connection terminal (120) does not change, the controller (160), through I2C communication with the decoder (130), determines whether or not the format of the video signal input from the multimedia source is the digital interface format.

16. The video apparatus of claim 13, 14 or 15 wherein if the user confirms that the connection mode with the multimedia source is not the digital video interface mode, the controller (160), through I2C communication with the decoder (130), determines whether or not the format of the video signal input from the multimedia source is the digital interface format.

17. The video apparatus of any one of claims 12-16, further comprising:
a digital interface recognition signal generator which outputs the digital interface recognition signal to the multimedia source,
wherein if the format of the video signal input from the multimedia source is not the digital interface format, the controller (160) controls the digital interface recognition signal generator to output the digital interface recognition signal to the multimedia source so that the multimedia source re-executes digital interface recognition.

18. The video apparatus of claim 17, wherein the digital interface recognition signal is a hot plug detection (HPD) signal set to a low level for a period of time.

19. The video apparatus of claim 18, wherein the controller (160) controls the recognition signal controller to extend the low level period of the digital interface recognition signal to output the digital interface recognition signal to the multimedia source.

20. The video apparatus of claim 18 or 19, wherein the controller (160) extends the low level period of the digital interface recognition signal by extending a high level period of a high level control signal controlling the digital interface recognition signal.

21. The video apparatus of claim 20, wherein if the format of the video signal input from the multimedia source is not the digital interface format after the low level period of the digital interface recognition signal is extended to output the digital interface recognition signal to the multimedia source, the controller (160) repeats the extending of the low level period of the digital interface recognition signal and the output to the multimedia source, and the determining as to whether or not the format of the video signal input from the multimedia source is the digital interface format, by a number of times.

22. The video apparatus of claim 18, 19, 20 or 21, wherein if the format of the video signal input from the multimedia source is not the digital interface format after repeating the extending of the low level period of the digital interface recognition signal and the output to the multimedia source, and the determining as to whether or not the format of the video signal input from the multimedia source is the digital interface format, for the number of times, the controller (160) controls the OSD generator (190) to display a message indicating an abnormality of a connection state.

23. The video apparatus of any one of claims 12-22, wherein the digital interface is a high definition multimedia interface (HDMI).
